# EUROPEAN PATENT SPECIFICATION

(11) **EP 1 894 688 B1**
(45) Date of publication and mention of the grant of the patent: **22.04.2009**
(21) Application number: 07016862.0
(22) Date of filing: 28.08.2007
(51) Int. Cl.: B27C 1/10, B23Q 11/00

(54) **Electric planer**
Elektrischer Hobel
Raboteuse électrique

(30) Priority: 30.08.2006 JP 2006233918
(43) Date of publication of application: 05.03.2008
(73) Proprietor: Makita Corporation, Anjo-shi, Aichi-ken 446-8502 (JP)
(72) Inventor: Inai, Masahiko, Anjo-shi Aichi 446-8502 (JP); Yoshimura, Takayoshi, Anjo-shi Aichi 446-8502 (JP)
(74) Representative: Kramer - Barske - Schmidtchen

(56) References cited:
- EP-A- 1 348 526
- EP-A- 1 428 620
- DE-A1- 4 310 280
- JP-A- 7 186 103

## Description

### BACKGROUND OF THE INVENTION

### Field of the Invention

The present invention relates to a portable electric planer that performs a planing operation by moving a planer blade rotationally driven by a motor, along a workpiece, and more particularly, to a chip discharging technique with which the direction of discharging chips or shavings generated during planing operation can be changed, as per the preamble of claim 1. An example of such a planer is disclosed by EP-A-1 428 620.

### Description of the Related Art

A known portable electric planer is constructed to discharge chips and shavings generated during planing operation, sideways with respect to the cutting direction of a planer blade. It is desirable that discharging direction of chips and shavings generated during planing operation can be changed to the right or to the left as necessary depending on the user's dominant hand or the surrounding circumstances of the work area. In this regard, EP 1,428,620 discloses an electric planer in which the direction of discharging chips or shavings can be changed. This known planer includes a discharge passage extending in a direction that intersects with the direction of movement in planing operation and having both right and left open ends in its extending direction. A discharge pipe for chips or shavings is selectively inserted into the discharge passage through either one of the right and left openings. Specifically, the direction of discharging chips or shavings which are led into the discharge passage together with exhaust air expelled from the motor can be changed by changing the direction of inserting the discharge pipe into the discharge passage.

However, the above-described discharge pipe is designed such that, for example, the left opening of the discharge passage is closed by inserting the discharge pipe through the right opening. Thus, half of the discharge passage formed within the housing is utilized as a chip discharge region, but remaining half region is not utilized as a chip discharge region. Specifically, about the half of the discharge passage exists as a dead space which is not utilized as a chip discharge region.

DE 43 10 280 A1 discloses a planer (cf. Fig. 4) comprising a swarf guide chamber fitted in the machine tool housing leading to a housing region with two outlets in opposite side walls. A swarf deflector is adjustable between two use positions. In each position the deflector covers one outlet and guides the swarf to the other one. The deflector is removable selectively. ,

JP 07-186103 A discloses an electric planer comprising through holes in a cut powder cut-off wall to reduce the noise when the planer is operated.

EP 1 348 526 A relates to a planer with a chip-ejecting duct whose chip ejecting direction is changeable by rotating the chip-ejecting duct about its axis through a certain angle.

### SUMMARY OF THE INVENTION

Accordingly, it is an object of the invention to provide a technique which contributes to effective use of the internal space designed as a discharge passage in an electric planer.

The above-described object is achieved by the claimed invention. A representative electric planer is provided to have a motor, a planer blade that is rotationally driven by the motor and planes a workpiece, and a chip discharging mechanism that discharges chips by using motor exhaust air generated when the motor is driven. The chip discharging mechanism includes a discharge passage that extends in a direction that intersects with the planing direction of the planer blade, openings formed in the both ends of the discharge passage in the extending direction, and a motor exhaust air inlet formed in an intermediate region of the discharge passage in the extending direction. The motor exhaust air according to the invention may typically and preferably be defined by a motor cooling air.

The chip discharging mechanism further includes a discharge direction changing mechanical part that is separately formed and removably mounted selectively to either one of the openings to thereby determine the discharge direction in which the motor exhaust air is discharged to the outside through the discharge passage. The discharge direction changing mechanical part includes a closing member that closes the one opening on the mounted side, and a deflector that changes the direction of flow of the motor exhaust air. With this construction, one of the openings of the both ends of the discharge passage is selected so as to be closed and the discharge direction changing mechanical part is mounted to the selected opening. Accordingly, the outlet for chips can be changed.

Further, the deflector of the discharge direction changing mechanical part extends in the extending direction of the discharge passage and guides the motor exhaust air led into the discharge passage through the motor exhaust air inlet, toward the closing member and then changes the direction of flow of the motor exhaust air in the vicinity of the closing member and leads the motor exhaust air to the other opening which is not closed.

The deflector guides the motor exhaust air is led into the discharge passage through the motor exhaust air inlet, toward the closing member or the closed opening. Then, the deflector changes the direction of flow of the motor exhaust air in the vicinity of the closing member and guides the motor exhaust air to the opening which is not closed. Specifically, the flow of motor exhaust air through the discharge passage is turned around. With this construction, a space existing as the discharge passage can be fully utilized and the flow of motor exhaust air through the discharge passage can be increasingly prolonged. As a result, driving noises of the motor and the planer blade can be prevented from leaking to the outside through the discharge passage, so that noise reduction can be achieved.

The discharge passage may preferably be partitioned into the first passage and the second passage in isolation from each other. Thus, the motor exhaust air led into the motor exhaust air inlet can be prevented from leaking between the first and second passages, so that the flow of the motor exhaust air can be straightened. Further, driving noises of the driving motor and the planer blade can be more effectively prevented from leaking out.

Further, the direction of mounting the discharge direction changing mechanical part to the discharge passage may preferably be different from the direction of its removal. As a result, discharge direction changing mechanical part is retained in the mounted position unless the discharge direction changing mechanical part is acted upon by a force of rotating it in the circumferential direction and a force of removing it in the axial direction. Thus, the mounted state of the discharge direction changing mechanical part can be more securely maintained in an improved manner.

Further, the discharge passage may include a bore having both ends open in the extending direction, and a recess formed in the inner wall surface of the bore, recessed radially outward and having a predetermined length extending in the extending direction of the bore. Further, the deflector may include a plate-like member having a circular arc section and having a predetermined length extending in the extending direction of the discharge passage. The deflector may be disposed within the recess and thereby partitions the internal space of the bore into a first passage on the side of the recess and a second passage on the side of the bore. The radially inner wall surface of the deflector may be smoothly contiguous to the inner wall surface of the bore which defines the second passage. By such construction, chips are not easily caught between the radially inner wall surface of the deflector and the inner wall surface of the bore. Thus, chips can be more effectively discharged.

Further, the discharge direction changing mechanical part may include a first mechanical part having the closure and the deflector, and a second mechanical part having the engagement mechanical part. The first and second mechanical parts may be placed side by side in the direction of insertion of the discharge direction changing mechanical part and are rotatably connected to each other under application of a biasing force of the spring member in the both directions around the direction of insertion of the discharge direction changing mechanical part. By such construction, the first and second mechanical parts are allowed to rotate in the circumferential direction on the axis extending in the direction of insertion with respect to each other. In this state, the first and second mechanical parts can be normally held in position in the circumferential direction. Therefore, by moving (turning) the second mechanical part in the circumferential direction without moving the first mechanical part in the circumferential direction, the engagement between the engagement portion and the engagement piece of the engagement mechanical part can be released.

Chips generated during planing the workpiece may preferably, be led into the second passage of the discharge passage. By this, chips are led to the downstream side of the discharge passage, so that the discharge passage is not easily choked with chips.

Other objects, features and advantages of the present invention will be readily understood after reading the following detailed description together with the accompanying drawings and the claims.

### BRIEF DESCRIPTION OF THE DRAWINGS

FIG. 1 is a perspective view showing an entire electric planer according to an embodiment of the invention.
FIG. 2 is a side view showing the entire electric planer according to the embodiment of the invention.
FIG. 3 is a sectional perspective view showing a cylindrical chip discharge portion in the state in which a chip discharge unit is not yet mounted.
FIG. 4 is a sectional perspective view showing the chip discharge unit mounted on the left side of the cylindrical chip discharge portion.
FIG. 5 is a sectional perspective view showing the chip discharge unit mounted on the right side of the cylindrical chip discharge portion.
FIG. 6 is a perspective view of the chip discharge unit.
FIG. 7 is a sectional view of the chip discharge unit.
FIG. 8 is a sectional view taken along line A-A in FIG. 7.
FIG. 9 is a sectional view showing the cylindrical chip discharge portion with the chip discharge unit mounted thereto and an engagement mechanical part.
FIG. 10 is a sectional view showing the cylindrical chip discharge portion with the chip discharge unit mounted thereto and an engagement mechanical part, in the disengaged state.
FIG. 11 is a schematic view showing a modification to the chip discharge mechanism

### DETAILED DESCRIPTION OF THE INVENTION

Representative examples of the present invention will now be described in detail with reference to the drawings. This detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.

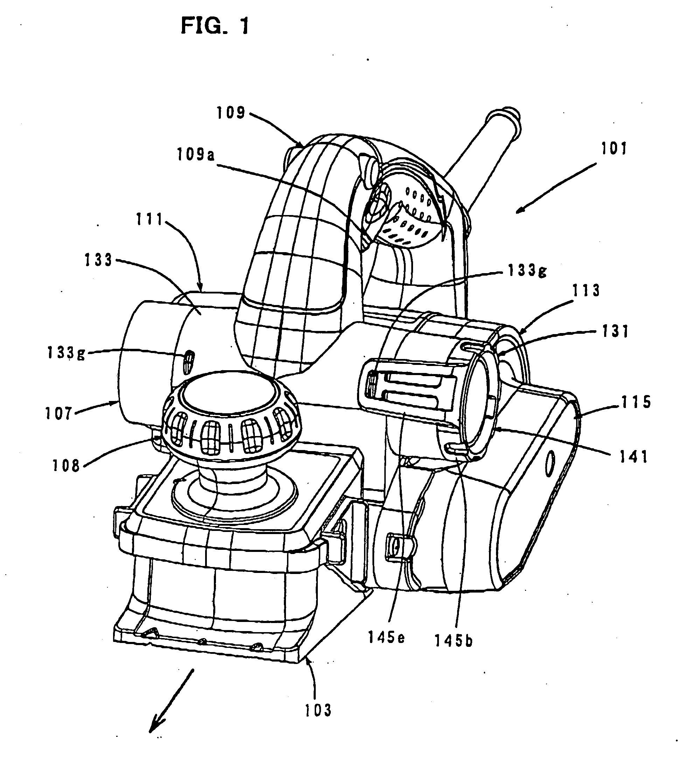

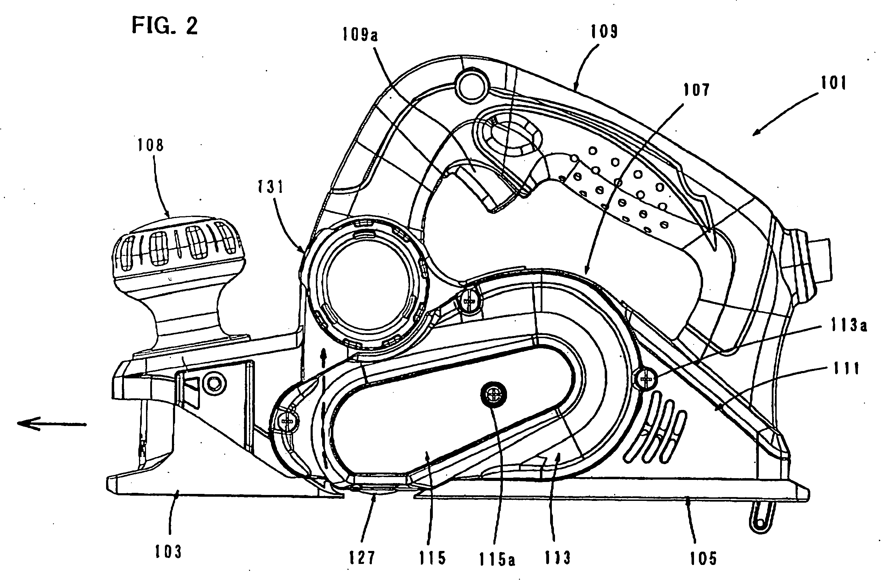

A representative embodiment of the present invention is now described with reference to FIGS. 1 to 10. As shown in FIGS. 1 and 2, an electric planer 101 includes front and rear bases 103, 105 which are disposed on the front and the rear in the direction of movement (travel) of the planer along the workpiece during planing operation, a body 107 as a tool body which is disposed on the bases 103, 105, and a handle 109 which is connected to the upper surface of the body 107 and is held by the user. In FIGS. 1 and 2, the direction of travel of the electric planer 101 during planing operation is shown by an arrow.

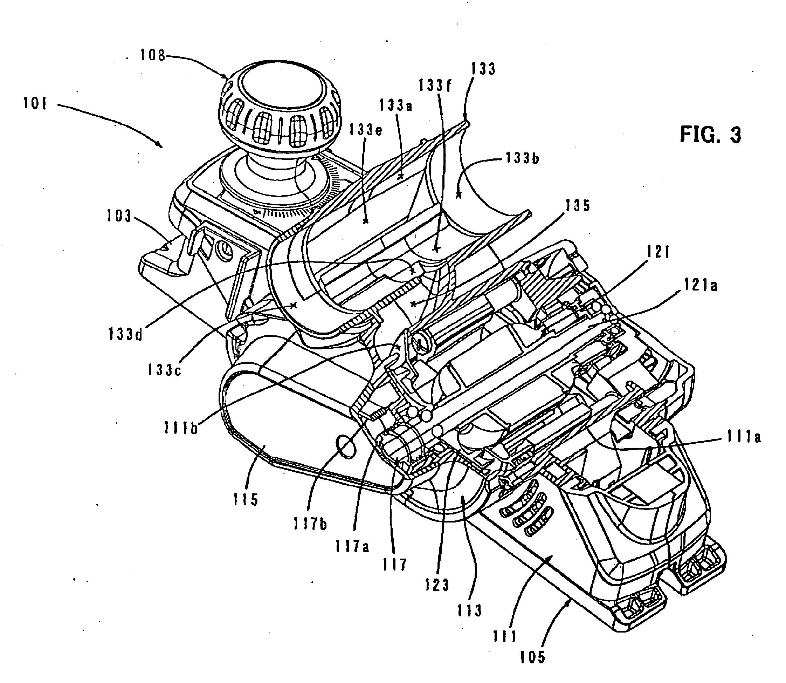

The body 107 includes a motor housing 111, a side housing 113 and a cover 115. The motor housing 111 houses a driving motor 121 (see FIGS. 3 to 5) and a planer blade 127 (see FIG. 2). The side housing 113 is detachably connected to the motor housing 111 by screws 113a and houses a power transmitting mechanism 117 (see FIGS. 3 to 5) that transmits the rotating output of the driving motor 121 to the planer blade 127. The cover 115 is removably mounted to the side housing 113 to open and close the side opening of the side housing 113. The driving motor 121 and the planer blade 127 are features that correspond to the "motor" and the "blade", respectively, according to the present invention.

The driving motor 111 is disposed within the motor housing 111 such that its rotating shaft extends in a horizontal direction that intersects with the direction of travel of the electric planer 101 during planing operation. The planer blade 127, which is not specifically shown, includes a generally cylindrical rotary drum which is supported rotatably on an axis parallel to the rotating shaft of the driving motor 121, and a plurality of cutting blades which are mounted on the rotary drum at predetermined intervals in the circumferential direction and extend in the axial direction of the rotary drum. The planer blade 127 is disposed in front of the driving motor 121, and a lower edge of the planer blade 127 is exposed below from an opening formed in the bottom of the motor housing 111. As shown in FIGS. 3 to 5, the power transmitting, mechanism 117 includes a driving pulley 117a rotationally driven by the driving motor 121, a driven pulley (not shown) that rotates together with the planer blade 127, and a belt 117b that transmits rotation of the driving pulley 117a to the driven pulley. The driving motor 121 is started by depressing a trigger 109a disposed on the handle 109. Further, a grip 108 is provided on the front upper surface of the motor housing 111.

In order to perform the planing operation by the planer blade 127, the user holds the handle 109 and the grip 108 and depresses the trigger 109a to start the driving motor 121. When the driving motor 121 is started and the planer blade 127 is rotationally driven, the user then places the front bases 103 on the surface of the workpiece and slides it forward along the workpiece. The cutting depth of the planer blade 127 in the planing operation can be adjusted by adjusting the position of the front base 103 in the height direction with respect to the body 107 and thereby changing the amount of protrusion of the lower edge of the planer blade 127 from the underside of the front base 103.

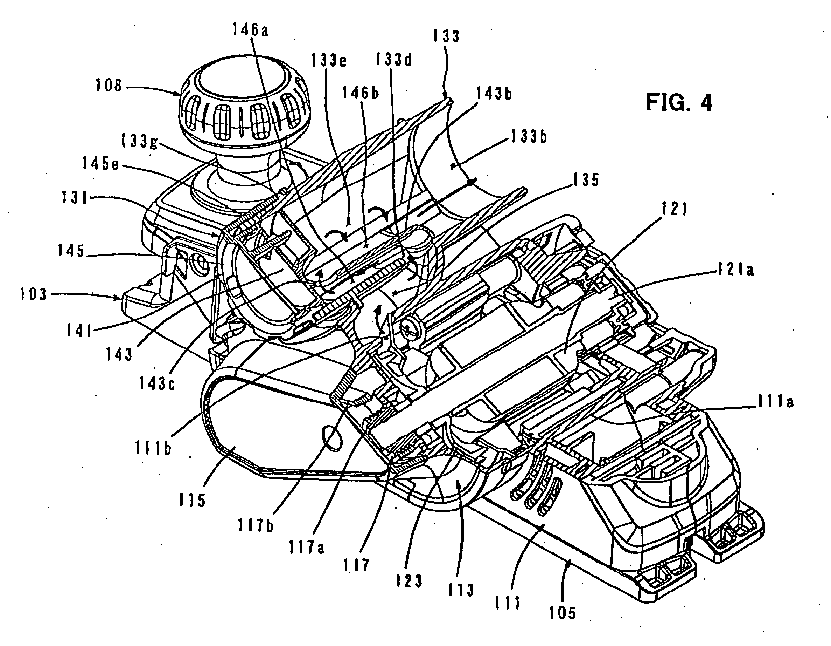

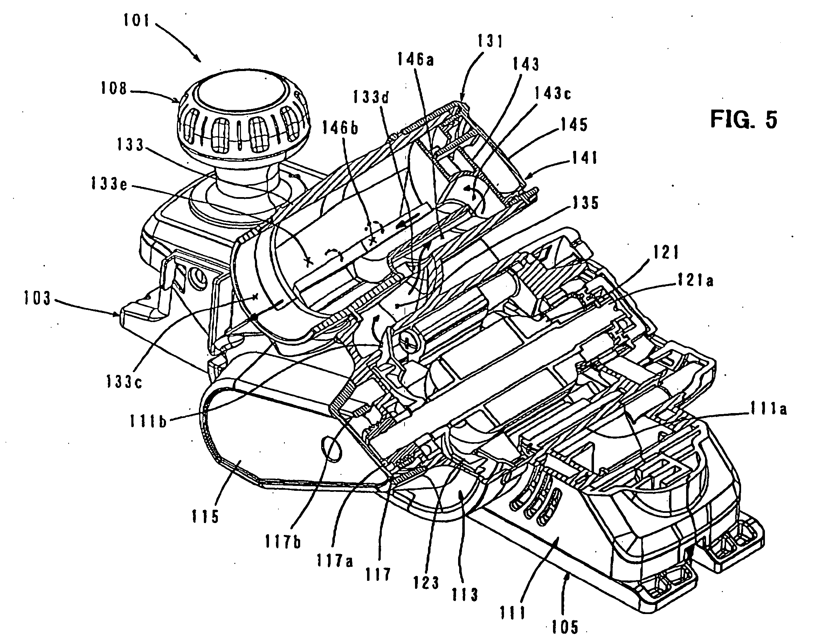

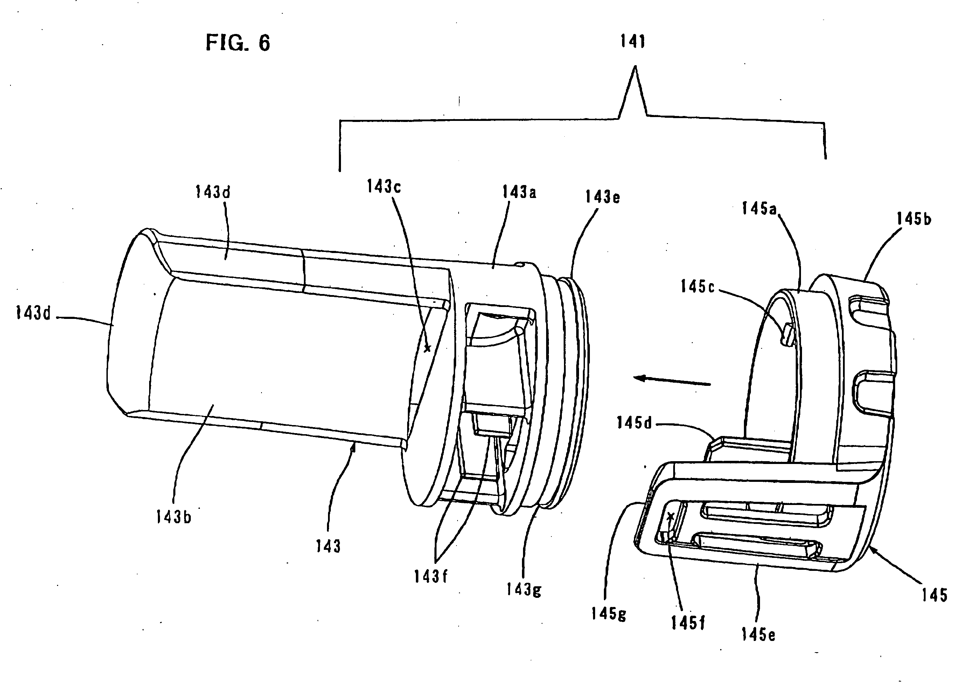

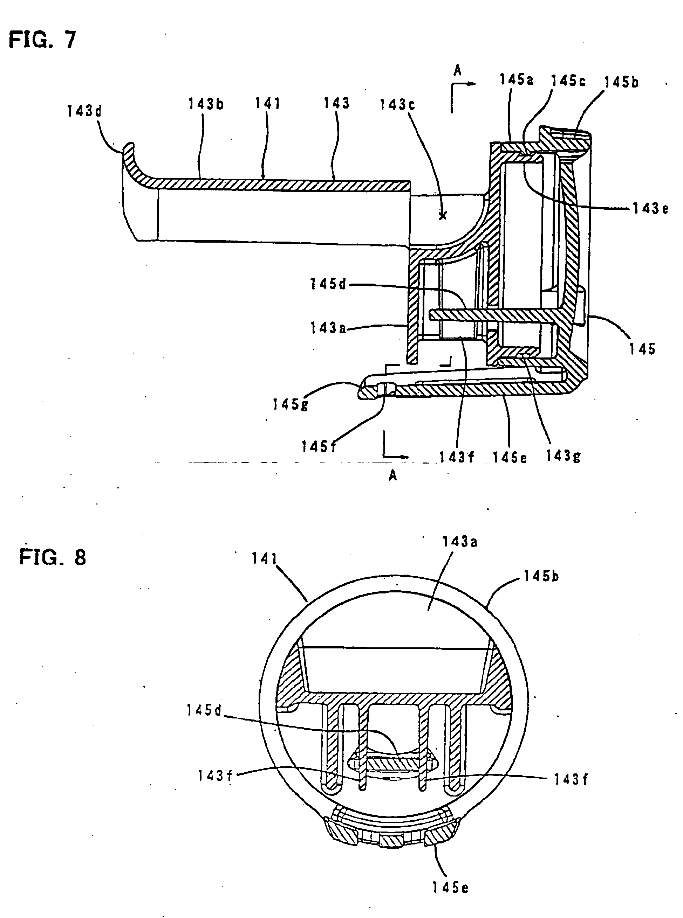

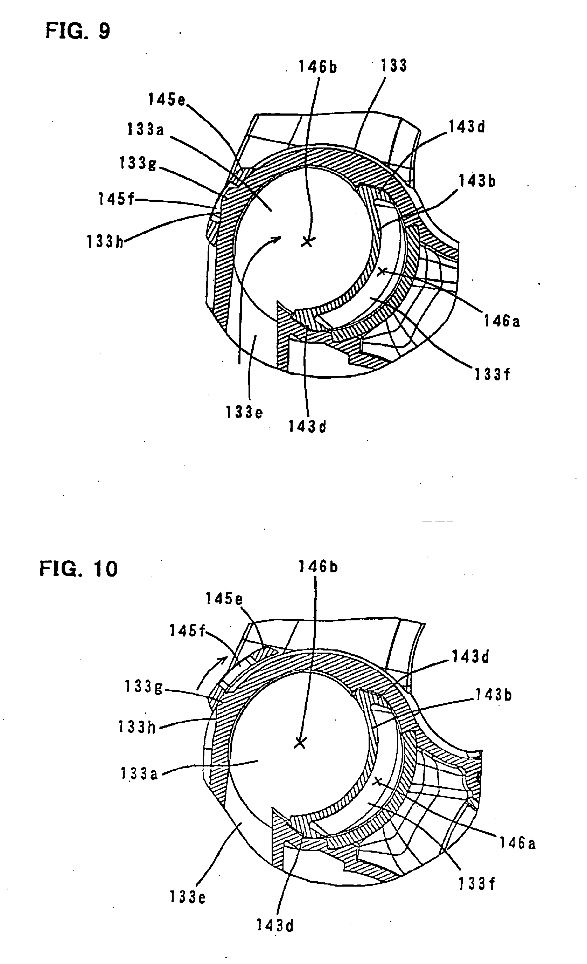

A chip discharging mechanism 131 for discharging chips or shavings generated during operation of planing a workpiece, is explained with reference to FIGS. 3 to 10. The chip discharging mechanism 131 according to this embodiment includes a cylindrical chip discharge portion 133 having a discharge bore 133a and a chip discharge unit 141. The cylindrical chip discharge portion 133 discharges chips to the outside by utilizing motor exhaust air generated when the driving motor 121 is driven. The chip discharge unit I41 is removably attached to the cylindrical chip discharge portion 133 and defines the direction of chip discharge. The cylindrical chip discharge portion 133 and the chip discharge unit 141 are features that correspond to the "passage component" and the "discharge direction changing mechanical part", respectively, according to the invention. FIG. 3 shows the cylindrical chip discharge portion 133 in which the chip discharge unit 141 is not yet mounted. FIGS. 4 and 5 show the cylindrical chip discharge portion 133 with the chip discharge unit 141 mounted thereto. FIG. 6 is a perspective view of the chip discharge unit 141. FIGS. 7 and 8 are sectional views of the chip discharge unit 141. FIGS. 9 and 10 are sectional views of the chip discharge unit 141 mounted to the cylindrical chip discharge portion 133.

As shown in FIG. 3, the cylindrical chip discharge portion 133 is formed in front of the driving motor 121 and above the planer blade 127 within the motor housing 111. The discharge bore 133a of the cylindrical chip discharge portion 133 extends horizontally in the lateral direction that intersects with the direction of travel of the electric planer 101 during planing operation. The both extending ends of the discharge bore 133a are open. Specifically, the cylindrical chip discharge portion 133 has the discharge bore 133a which are open to the right and the left in the direction of travel of the planer 101 and form chip outlets 133b, 133c. The outlets 133b, 133c are features that correspond to the "openings" according to the present invention. Further, a recess 133f having a circular arc section and recessed radially outward is formed in the inner wall surface that defines the discharge bore 133a of the cylindrical chip discharge portion 133. The recess 133f is formed in a predetermined region (over the range of about 110 to 130° of 360°) in the circumferential direction and has a predetermined length in the extending direction of the discharge bore 133a. The cylindrical chip discharge portion 133 further has an exhaust air inlet 133d for introducing exhaust air used for cooling the driving motor 121 into the recess 133f of the discharge bore 133a, and a chip inlet 133e for introducing chips generated by planing operation of the planer blade 127 into the discharge bore 133a. The exhaust air inlet 133d is a feature that corresponds to the "motor exhaust air inlet" according to this invention. The exhaust air inlet 133d is formed generally in the middle of the recess 133f in the longitudinal direction (extending direction) and open in the radial direction.

As shown in FIG. 3, a cooling fan 123 is provided on the rotating shaft 121a of the driving motor 121 and rotates together with the rotating shaft 121a. The cooling fan 123 is disposed within a motor receiving part 111a formed in the motor housing 111 together with the driving motor 121. An exhaust port 111b of air used for cooling the driving motor 121 is formed in the front of the motor receiving part Further, an exhaust air guide channel 135 is formed between the motor receiving part 111a and the cylindrical chip discharge portion 133 and guides exhaust air (cooling air) from the exhaust port 111b to the exhaust air inlet 133d. Therefore, when the driving motor 121 is driven and thus causes the cooling fan 123 to rotate, outside air is taken as cooling air by a suction force of the cooling fan 123 into the motor receiving part 111 a through an inlet (not shown) which is formed in one axial end of the motor receiving part 111a. The cooling air flows toward the cooling fan 123 within the motor receiving part 111a and thereby cools the driving motor 121. As shown in FIGS. 4 and 5 by arrows, the cooling air used for cooling the driving motor 121 is discharged from the exhaust port 111b of the motor receiving part 111 a to the exhaust air guide channel 135 and then led into the recess 133f through the exhaust air inlet 133d.

FIGS. 6 to 10 show the chip discharge unit 141. The chip discharge unit 141 includes a first mechanical part or a discharge direction determining member 143 that determines the direction of discharge of chips by selectively closing either the right outlet 133b or the left outlet 133c of the cylindrical chip discharge portion 133, and a second mechanical part or a removable cover member 145 that can be removably mounted to the cylindrical chip discharge portion 133. The discharge direction determining member 143 and the removable cover member 145 are made of synthetic resin and formed separately from each other.

The chip discharge direction determining member 143 includes a closure 143a that closes the outlet 133b or the outlet 133c and an air deflector 143b that changes the direction of flow of exhaust air. The closure 143a and the air deflector 143b are features that correspond to the "closing member" and the "deflector", respectively, according to the present invention. The closure 143a has a generally drum-like shape having a circular external shape and is fitted into either the right outlet 133b or the left outlet 133c of the cylindrical chip discharge portion 133 and thereby selectively closes the outlet 133b or 133c. In FIG. 4, the closure 143a is shown fitted in the left outlet 133c, and in FIG. 5, the closure 143a is shown fitted in the right outlet 133b. The air deflector 143b is integrally formed with the closure 143a and inserted into the discharge bore 133a together with the closure 143a when the closure 143a is fitted into either the right outlet 133b or the left outlet 133c.

The air deflector 143b is a plate-like member having a generally circular arc section and extends horizontally from the inner side ofthe end surface of the closure 143a in the axial direction (the extending direction of the discharge bore 133a). Further, a communication hole 143c is formed in the proximal end of the air deflector 143b (at the connection between the air deflector 143b and the closure 143a) and provides communication between the outside and the inside of the air deflector 143b. When the air deflector 143b is inserted into the discharge bore 133a of the cylindrical chip discharge portion 133, the air deflector 143b is placed such that the peripheral edge of the air deflector 143b engages the inner peripheral edge of the recess 133f on the open side. As a result, the internal space of the cylindrical chip discharge portion 133 is partitioned into an upstream region 146a having a generally circular arc section and mainly formed by the recess 133f and a downstream region 146b having a generally circular section and mainly formed by the discharge bore 133a, in isolation from each other (see FIG. 9). The upstream region 146a and the downstream region 146b are features that correspond to the "first passage" and the "second passage", respectively, according to the present invention. Further, the upstream region 146a and the downstream region 146b are features that correspond to the "discharge passage" according to the present invention.

The air deflector 143b partitions the internal space of the cylindrical chip discharge portion 133 into the upstream region 146a and the downstream region 146b. In the upstream region 146a, exhaust air which has entered the recess 133f through the exhaust air inlet 133d is led toward the communication hole 143c (the closure 143a). In the downstream region 146b, exhaust air which has entered the exhaust bore 133a through the communication hole 143c is turned around in the vicinity of the closure 143a and led to the open outlet 133b or 133c. Further, the peripheral edge of the air deflector 143b is bent radially outward and forms a bent portion 143d. The bent portion 143d is held in contact with the wall surface of the recess I33f. Exhaust air which has entered the upstream region 146a through the exhaust air inlet 133d is led into the downstream region 146b through the communication hole 143c while being prevented from escaping into the downstream region 146b in the middle of the flow. Further, the air deflector 143b disposed in the recess 133f is configured such that its radially inner wall surface is generally flush with the bore wall surface defining the downstream region 146b. Thus, chips can be smoothly discharged outside without being caught in the downstream region 146b.

As shown in FIGS. 6 to 8, the chip discharge direction determining member 143 and the removable cover member 145 are placed side by side in the direction of insertion. In order to assemble the discharge direction determining member 143 and the removable cover member 145 together, the closure 143a has a cylindrical portion 143e having a diameter smaller than the outside diameter of the closure 143a, and two resin springs 143f opposed to each other in the circumferential direction. The cylindrical portion 143e extends axially from the outside end surface of the closure 143a (on the side opposite from the air deflector 143b). An engagement portion 145a of the removable cover member 145 is fitted onto the cylindrical portion 143e. The two resin springs 143f extend radially from the closure 143a within the circular surface region of the closure 143a. The resin springs 143f serve to define the circumferential position of the removable cover member 145 with respect to the discharge direction determining member 143 when the engagement portion 145a of the removable cover member 145 is fitted onto the cylindrical portion 143e.

The removable cover member 145 has a stepped cap-like form having the cylindrical engagement portion 145a and a cylindrical grip portion 145b which has a larger diameter than the engagement portion 145a and can be held by the user's fingers. As described above, the removable cover member 145 can be assembled to the closure 143a of the discharge direction determining member 143 by fitting the engagement portion 145a onto the cylindrical portion 143e. A plurality of claws 145c are formed in the inner wall surface of the engagement portion 145a of the removable cover member 145 and arranged at appropriate intervals in the circumferential direction. When the engagement portion 145a is fitted onto the cylindrical portion 143e, the claws 145c engage a ring groove 143g formed in the outer circumferential surface of the cylindrical portion 143e. Thus, the removable cover member 145 is prevented from becoming detached and is allowed in this state to move in the circumferential direction with respect to the cylindrical portion 143e.

Further, a protruding piece 145d is formed on the inner side of the end surface of the grip portion 145b of the removable cover member 145 and extends horizontally toward the closure 143a. When the engagement portion 145a of the removable cover member 145 is fitted onto the cylindrical portion 143e, the protruding piece 145d is inserted between the opposed resin springs 143f of the closure 143a and elastically retained by the resin springs 143f (see FIG. 8). As a result, the removable cover member 145 and the discharge direction determining member 143 are retained in a predetermined position in the circumferential direction with respect to each other, or in an initial position. When the user holds the grip145b of the removable cover member 145 and applies an external force to (turns) the grip portion 145b in the circumferential direction, one of the resin springs 143f is pushed by the protruding piece 145d and thus elastically deforms. As a result, the removable cover member 145 is allowed to move in the circumferential direction with respect to the discharge direction determining member 143. Specifically, in the chip discharge unit 141, the removable cover member 145 and the discharge direction determining member 143 are assembled together such that they are allowed to move a predetermined distance in the circumferential direction with respect to each other, while being integrated in the axial direction (see FIGS. 7 and 8).

As described above, the chip discharge unit 141 having the removable cover member 145 and the discharge direction determining member 143 assembled and integrated together, is inserted into the discharge bore 133a ofthe cylindrical chip discharge portion 133 from the right or left chip outlet 133b or 133c. Thus, the chip discharge unit 141 is removably attached to the cylindrical chip discharge portion 133. The removable cover member 145 has a clip 145e that serves to removably lock the chip discharge unit 141 inserted into the discharge bore 133a in that inserted position. The clip 145e extends in the direction of insertion from a predetermined position on the outer periphery of the grip portion 145b and has a predetermined length in the axial direction. Further, a generally rectangular engagement hole 145f is formed in the extending end portion of the grip portion 145b. As shown in FIGS. 4 and 5, when the chip discharge unit 141 is inserted into the discharge bore 133a of the cylindrical chip discharge portion 133, the engagement hole 145f selectively removably engages either a right projection 133g or a left projection 133g formed on the outer surface of the cylindrical chip discharge portion 133. Thus, the chip discharge unit 141 is removably locked to the cylindrical chip discharge portion 133 (see FIG. 1). The clip 145e and the projections 133g are features that correspond to the "engagement mechanical part", and the clip 145e to the "engagement piece" and the projections 133g to the "engagement portion", according to this invention.

When the chip discharge unit 141 is inserted into the discharge bore 133a of the cylindrical chip discharge portion 133, the extending end of the clip 145e contacts the projection 133g and then climbs over the projection 133g while elastically deforming, so that the engagement hole 145f engages the projection 133g. In this engaged state, the wall of the engagement hole 145f and the projection 133g are locked to each other in a direction opposite to the direction of insertion of the chip discharge unit 141. Thus, the chip discharge unit 141 is retained in the removal prevented state with respect to the discharge bore 133a. The extending end of the clip 145e has a tapered surface 145g, so that the engagement of the engagement hole 145f of the clip 145e with the projection 133g can be smoothly performed (see FIGS. 6 and 7).

The engagement between the clip 145e and the projection 133g is released by turning the removable cover member 145 of the chip discharge unit 141 in one circumferential direction. Specifically, as shown in FIGS. 9 and 10, each of the right and left projections 113g formed on the outer surface of the cylindrical chip discharge portion 133 has an inclined surface 133h on the front in the circumferential direction. Therefore, in order to release the engagement between the clip 145e and the projection 133g, when the chip discharge unit 141 is placed, for example, in the left outlet 133c, the removable cover member 145 is turned clockwise (in the direction shown by the arrow in FIG. 10). Then, the wall ofthe engagement hole 145f climbs over the projection 133g while being guided by the inclined surface 133h, so that the engagement between the clip 145e and the projection 133g is released. This state is shown in FIG. 10. When the chip discharge unit 141 is in the right outlet 133b, the removable cover member 145 is turned counterclockwise with respect to the direction of insertion.

When the removable cover member 145 is turned, the discharge direction determining member 143 is held in engagement with the recess 133f of the cylindrical chip discharge portion 133 and thus prevented from moving (rotating) in the circumferential direction. Therefore, the removable cover member 145 is turned with respect to the discharge direction determining member 143 while elastically deforming one of the resin springs 143f via the protruding piece 145d. Then, when the engagement between the clip 145e and the projection 133g is released, the removable cover member 145 is pulled toward the user. Thus, the chip discharge unit 141 can be removed from the cylindrical chip discharge portion 133.

In the electric planer 101 having the above-descn'bed construction, in order to discharge chips generated during planing operation, for example, to the right side, as shown in FIG. 4, the chip discharge unit 141 is inserted into the discharge bore 133a from the left outlet 133c of the cylindrical-chip discharge portion 133. In this state, when the driving motor 121 is driven and the planer blade 127 is rotated, exhaust air generated by rotation of the cooling fan 123 and used for cooling the driving motor 121 is led from the exhaust port 111b to the exhaust air inlet 133d via the exhaust air guide channel 135. Then, as shown by arrows in FIG. 4, the exhaust air led into the exhaust air inlet 133d generally linearly flows through the upstream region 146a toward the closure 143a, and then enters the downstream region 146b through the communication hole 143c. The exhaust air led into the downstream region 146b is turned around and flows toward the right open outlet 133b.

Chips generated during planing operation of the planer blade 127 are led upward (as shown by the dotted line in FIG. 2) together with the air flow generated by rotation of the planer blade. Then, the chips flow into the downstream region 146b of the exhaust bore 133a through the chip inlet 133e and are discharged to the outside to the right side through the right outlet I33b by the exhaust air flowing through the downstream region 146b toward the right outlet 133b.

In order to change the direction of chip discharge from right to left, the chip discharge unit 141 is removed from the cylindrical chip discharge portion 133. Specifically, as described above, the grip portion 145b of the removable cover member 145 is held by the user's fingers and turned such that the clip 145e is disengaged from the projection 133g of the cylindrical chip discharge portion 133, as shown in FIG. 10. Thereafter, in the disengaged state, the removable cover member 145 is pulled toward the user. At this time, the removable cover member 145 is turned with respect to the discharge direction determining member 143 while elastically deforming one of the resin springs 143f via the protruding piece 145d. Therefore, when the discharge direction determining member 143 is removed from the recess 133f, or when the force of turning the removable cover member 145 is released in the process of such removal, the removable cover member 145 and the discharge direction determining member 143 return to the initial position in which they are placed before the turning operation, by the restoring force of the resin spring 143f.

Then, the air deflector 143b of the chip discharge unit 141 removed from the left outlet 133c of the cylindrical chip discharge portion 133 is positioned with respect to the recess 133f such that the air deflector 143b can be fitted into the recess 133f. In this state, the air deflector 143b is inserted into the discharge bore 133a from the right outlet 133b. By this insertion, the outer circumferential surface of the closure 143a and the outer circumferential surface of the engagement portion 145a ofthe removable cover member 145 are fitted to the outlet 133b. At the same time, the engagement hole 145f of the clip 145e engages the projection 133g of the cylindrical chip discharge portion 133. Thus, the chip discharge unit 141 is fixed to the cylindrical chip discharge portion 133 in the removal prevented state (see FIG. 5). Therefore, at this time, chips generated during planing operation can be discharged to the outside from the left outlet 133c of the discharge bore 133a by the flow of exhaust air which is shown by the arrows in FIG. 5.

According to this embodiment, the direction of chip discharge can be changed by selectively inserting the chip discharge unit 141 into the discharge bore 133a from the right or left outlet 133b or 133c of the cylindrical chip discharge portion 133.

Particularly in this embodiment, the air deflector 143 partitions the internal space of the cylindrical chip discharge portion 133 into the upstream region 146a and the downstream region 146b in isolation from each other. The air deflector 143 guides the exhaust air which has entered the upstream region 146a through the exhaust air inlet 133d, toward the outlet 133b or 133c closed by the closure 143a. Thereafter, the air deflector 143 changes the direction of flow of the exhaust air in the vicinity of the closure 143a and leads the exhaust air to the open outlet 133c or 133b. Thus, with the construction in which the flow of exhaust air is turned around within the cylindrical chip discharge portion 133, the internal space of the cylindrical chip discharge portion 133 can be utilized as a chip discharge passage and the distance of the flow of exhaust air through the discharge passage can be increased. As a result, driving noises of the driving motor 121 and the planer blade 127 can be efficiently prevented from leaking out through the discharge bore 133a, so that noise reduction can be effectively achieved.

Further, according to this embodiment, when the chip discharge unit 141 is inserted into the discharge bore 133a of the cylindrical chip discharge portion 133, the clip 145e formed on the grip portion 145b of the removable cover member 145 elastically engages the projection 113g formed on the outer surface ofthe cylindrical chip discharge portion 133. Thus, the chip discharge unit 141 is mounted to the cylindrical chip discharge portion 133 in the removal prevented state. Therefore, the chip discharge unit 141 can be mounted by a simple operation of insertion into the discharge bore 133a of the cylindrical chip discharge portion 133.

The engagement of the clip 145e with the projection 133g can be released by turning the chip discharge unit 141 in the direction of insertion. Specifically, the chip discharge unit 141 cannot be removed unless turned in the direction of insertion such that the clip 145e is disengaged from the projection 133g. Thus, in this construction, the direction of removal of the chip discharge unit 141 is different from the direction of its mounting, so that the mounted state of the chip discharge unit 141 can be more securely maintained in an improved manner.

Further, according to this embodiment, when the air deflector 143b of the chip discharge unit 141 is engaged with the recess 133f, the radially inner wall surface of the air deflector 143b is flush with the inner wall surface of the discharge bore 133a. Specifically, the radially inner wall surface of the air deflector 143b is smoothly contiguous to the inner wall surface of the discharge bore 133a. Therefore, chips are not easily caught between the radially inner wall surface of the air deflector 143b and the inner wall surface of the discharge bore 133a. Thus, chips can be more effectively discharged.

Further, in this embodiment, the chip discharge unit 141 is comprised of the removable cover member 145 and the discharge direction determining member 143. The protruding piece 145d of the removable cover member 145 is placed between the opposed resin springs 143f of the discharge direction determining member 143. With this arrangement, the removable cover member 145 and the discharge direction determining member 143 can be retained in position in the circumferential direction while being allowed to move with respect to each other in the circumferential direction around the axis extending in the direction of insertion. Thus, the direction of removal of the chip discharge unit 141 can be made different from the direction of its mounting. Further, the radially inner wall surface of the air deflector 143b can be made flush with the inner wall surface of the discharge bore 133a.

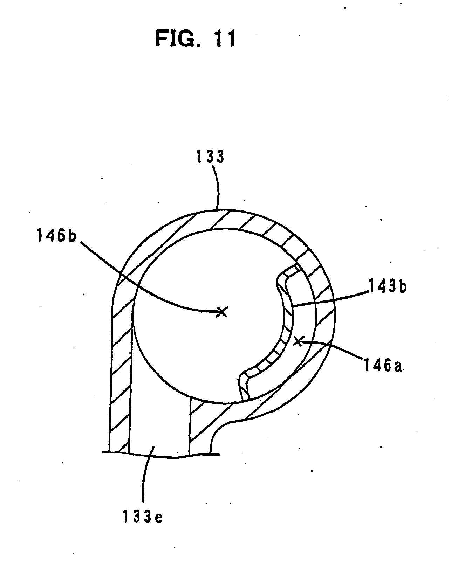

Further, in this embodiment, the recess 133f is formed in the inner wall surface of the discharge bore 133a and the air deflector 143b is disposed within the recess 133f, so that the internal space of the cylindrical chip discharge portion 133 is partitioned into the upstream region 146a and the downstream region 146b. However, the construction of partitioning the space into the upstream region 146a and the downstream region 146b is not limited to this. For example, as schematically shown in FIG. 11, the air deflector 143b formed by a plate-like member having a generally U-shaped section may be disposed within the discharge bore 133a such that the space within the discharge bore 133a is partitioned into the upstream region 146a and the downstream region 146b. In this case, the air deflector 143b is allowed to move (rotate) in the circumferential direction around the axis extending in the direction of insertion. Therefore, the removable cover member 145 and the discharge direction determining member 143 forming the chip discharge unit 141 can be formed into one piece.

### Description of Numerals

101 electric planer
103 front base
105 rear base
107 body
108 grip
109 handle
109a trigger
111 motor housing
111a motor receiving part
111b exhaust port
113 side housing
113a screw
115 cover
115a screw
117 power transmitting mechanism
117a driving pulley
117b belt
121 driving motor
121 a rotating shaft
123 cooling fan
127 planer blade
131 chip discharging mechanism
133 cylindrical chip discharge portion
133a discharge bore
133b outlet (opening)
133c outlet (opening)
133d exhaust air inlet (motor exhaust air inlet)
133e chip inlet
133f recess
133g projection (engagement mechanical part, engagement portion)
133h inclined surface
135 exhaust air guide channel
141 chip discharge unit (discharge direction changing mechanical part)
143 discharge direction determining member
143a closure (closing member)
143b air deflector (deflector)
143c communication hole
143d bent portion
143e cylindrical portion
143f resin spring
143g ring groove
145 removable cover member
145a engagement portion
145b grip portion
145c claw
145d protruding piece
145e clip (engagement mechanical part, engagement piece)
145f engagement hole
145g tapered surface
146a upstream region (first passage, discharge passage)
146b downstream region (second passage, discharge passage)

## Claims

1. An electric planer comprising:
a motor (121),
a planer blade (127) that is rotationally driven by the motor (121) and planes a workpiece, and
a chip discharging mechanism (131) that discharges chips by using motor exhaust air generated when the motor (121) is driven,
wherein the chip discharging mechanism (131) includes a discharge passage (133) that extends in a direction that intersects with the planing direction of the planer blade (127), openings (133b, 133c) formed in the both ends of the discharge passage (133) in the extending direction, and a motor exhaust air inlet (133d) formed in an intermediate region of the discharge passage (133) in the extending direction, wherein:
the chip discharging mechanism (131) further includes a discharge direction changing mechanical part (141) that is separately formed and removably mounted selectively to either one of the openings (133b, 133c) to thereby determine the discharge direction in which the motor exhaust air is discharged to the outside through the discharge passage (133),
**characterized in that** the discharge direction changing mechanical part (141) includes a closing member (143a) that closes the opening (133b, 133c) on which the closing member (143a) is mounted, and a deflector (143b) that changes the direction of flow of the motor exhaust air, and
the deflector (143b) extends in the extending direction of the discharge passage (133) and guides the motor exhaust air led into the discharge passage (133) through the motor exhaust air inlet (133d), toward the closing member (143a) and then changes the direction of flow of the motor exhaust air in the vicinity of the closing member (143a) and leads the motor exhaust air to the other opening (133b, 133c) which is not closed by the closing member (143a).

2. The electric planer as defined in claim 1, wherein the deflector (143b) partitions the discharge passage into a first passage (146a) and a second passage (146b) in isolation from each other, wherein the first passage (146a) guides the motor exhaust air from the motor exhaust air inlet (133d) to the closing member (143a) and the second passage (146b) guides the motor exhaust air which has been turned around in the vicinity of the closing member (143a), to the other opening (133b, 133c).

3. The electric planer as defined in claim 1 or 2, wherein:
the discharge direction changing mechanical part (141) is inserted into the discharge passage (133) selectively from the one or the other of the openings (133b, 133c) and removably mounted in the inserted position by an engagement mechanical part (133g, 145a),
the engagement mechanical part (133g, 145a) includes an engagement portion (133g) and an elastically deformable engagement piece (145e) that elastically engages the engagement portion (133g) in a direction opposite to the direction of insertion of the discharge direction changing mechanical part (141), the engagement portion (133g) being disposed in one of a passage component forming the discharge passage (133) and the discharge direction changing mechanical part (141) and extending in a direction that intersects with the direction of insertion of the discharge direction changing mechanical part (141), and the engagement piece (145e) being disposed in the other of the passage component and the discharge direction changing mechanical part (141), and
the engagement piece (145e) is disengaged from the engagement portion (133g) when rotated in the circumferential direction on the axis extending in the direction of insertion, so that the discharge direction changing mechanical part (141) is allowed to be removed from the discharge passage (133).

4. The electric planer as defined in claim 2, wherein:
the discharge passage (133) includes a bore (133a) having both ends open in the extending direction, and a recess (133f) formed in the inner wall surface of the bore (133a), recessed radially outward and having a predetermined length extending in the extending direction of the bore (133a),
the deflector (143b) comprises a plate-like member having a circular arc section and having a predetermined length extending in the extending direction of the discharge passage (133), and the deflector (143b) is disposed within the recess (133f) and thereby partitions the internal space of the bore (133a) into a first passage (146a) on the side of the recess (133f) and a second passage (146b) on the side of the bore (133a), and
the radially inner wall surface of the deflector (143b) is smoothly contiguous to the inner wall surface of the bore (133a) which defines the second passage (146b).

5. The electric planer as defined in claim 3, wherein:
the discharge direction changing mechanical part (141) includes a first mechanical part having the closure (143a) and the deflector (143b), and a second mechanical part having the engagement mechanical part (133g, 145e),
the first and second mechanical parts are placed side by side in the direction of insertion of the discharge direction changing mechanical part (141) and are rotatably connected to each other under application of a biasing force of the spring member (143f) in the both directions around the direction of insertion of the discharge direction changing mechanical part (141).

6. The electric planer as defined in any one of claims 2 to 5, wherein chips generated during planing the workpiece are led into the second passage (146b) of the discharge passage (133).

## Patentansprüche

1. Elektrischer Hobel mit
einem Motor (121),
einer Hobelschneide (127), die drehend durch den Motor (121) betrieben wird und ein Werkstück hobelt, und
einem Spanableitmechanismus (131), der Späne unter Verwendung von Motorabluft, die erzeugt wird, wenn der Motor (121) betrieben wird, ableitet,
bei dem der Spanableitmechanismus (131) eine Ableitungspassage (133), die sich in eine Richtung erstreckt, die sich mit der Hobelrichtung der Hobelschneide (127) kreuzt, Öffnungen (133b, 133c), die in den beiden Enden der Ableitungspassage (133) in der Erstreckungsrichtung ausgebildet sind, und eine Motorablufteinlassöffnung (133d), die in einem Zwischenbereich der Ableitungspassage (133) in der Erstreckungsrichtung ausgeformt ist, aufweist, bei dem
der Spanableitmechanismus (131) ferner ein mechanisches Ableitungsrichtungswechselteil (141) aufweist, das separat ausgebildet ist und entfernbar wahlweise in einer von den Öffnungen (133b, 133c) montiert wird, um damit die Ableitungsrichtung, in welcher die Motorabluft an die Außenseite durch die Ableitungspassage (133) abgeleitet wird, zu bestimmen,
**dadurch gekennzeichnet, dass** das mechanische Ableitungsrichtungswechselteil (141) ein Verschlussbauteil (143a), das die Öffnung (133b, 133c), an welcher das Verschlussbauteil (143a) montiert ist, verschließt, und eine Ablenkfläche (143b) aufweist, die die Strömungsrichtung der Motorabluft wechselt, und
die Ablenkfläche (143b) sich in die Erstreckungsrichtung der Ableitungspassage (133) erstreckt und die Motorabluft, die in die Ableitungspassage (133) durch die Motorablufteinlassöffnung (133d) eingeleitet wurde, in Richtung des Verschlussbauteils (143a) leitet und dann die Strömungsrichtung der Motorabluft in der Umgebung des Verschlussbauteils (143a) wechselt und die Motorabluft der anderen Öffnung (133b, 133c), die nicht durch das Verschlussbauteil (143a) verschlossen ist, zuführt.

2. Elektrischer Hobel nach Anspruch 1, bei dem die Ablenkfläche (143b) die Ableitungspassage in eine erste Passage (146a) und eine zweite Passage (146b) in Trennung voneinander teilt, wobei die erste Passage (146a) die Motorabluft von der Motorablufteinlassöffnung (133d) zu dem Verschlussbauteil (143a) leitet und die zweite Passage (146b) die Motorabluft, die in der Umgebung des Verschlussbauteil (143a) umgedreht worden ist, zu der anderen Öffnung (133b, 133c) leitet.

3. Elektrischer Hobel nach Anspruch 1 oder 2, bei dem
das mechanische Ableitungsrichtungswechselteil (141) in die Ableitungspassage (133) wahlweise von der einen oder von der anderen Öffnung (133b, 133c) aus eingesetzt wird und entfernbar in der Einsetzposition durch ein mechanisches Eingreifbauteil (133g, 145e) montiert wird,
das mechanische Eingreifbauteil (133g, 145e) ein Eingreifteil (133g) und ein elastisch verformbares Eingreifstück (145e) aufweist, das elastisch mit dem Eingreifteil (133g) in einer Richtung entgegengesetzt der Einsetzrichtung des mechanischen Ableitungsrichtungswechselteils (141) in Eingriff steht, wobei das Eingreifteil (133g) in einer von einer Passagekomponente, die die Ableitungspassage (133) ausbildet, und dem mechanischen Ableitungsrichtungswechselteil (141) angeordnet ist und sich in eine Richtung erstreckt, die sich mit der Einsetzrichtung des mechanischen Ableitungsrichtungswechselteils (141) kreuzt, und das Eingreifstück (145e) in der anderen von der Passagekomponente und dem mechanischen Ableitungsrichtungswechselteil (141) angeordnet ist, und
das Eingreifstück (145e) vom Eingriff mit dem Eingreifteil (133g) gelöst wird, wenn es in die Umfangsrichtung um die Achse, die sich in die Einsetzrichtung erstreckt, gedreht wird, so dass dem mechanischen Ableitungsrichtungswechselteil (141) ermöglicht wird von der Ableitungspassage (133) entfernt zu werden.

4. Elektrischer Hobel nach Anspruch 2, bei dem
die Ableitungspassage (133) eine Bohrung (133a), die beide Enden in die Erstreckungsrichtung offen hat, und eine Ausnehmung (133f) aufweist, die in der inneren Wandoberfläche der Bohrung (133a) ausgebildet ist, und die radial auswärts ausgenommen ist und eine vorbestimmte Länge, die sich in der Erstreckungsrichtung der Bohrung (133a) erstreckt, hat,
die Ablenkfläche (143b) ein plattenähnliches Bauteil aufweist, das einen rund gebogenen Bereich hat und eine vorbestimmte Länge hat, die sich in die Erstreckungsrichtung der Ableitungspassage (133) erstreckt, und die Ablenkfläche (143b) innerhalb der Ausnehmung (133f) angeordnet ist und damit den Innenraum der Bohrung (133a) in eine erste Passage (146a) auf der Seite der Ausnehmung (133f) und in eine zweite Passage (146b) auf der Seite der Bohrung (1 33a) teilt, und
die radiale innere Wandoberfläche der Ablenkfläche (143b) nahtlos anschließend an die innere Wandoberfläche der Bohrung (133a), die die zweite Passage (146b) definiert, ist.

5. Elektrischer Hobel nach Anspruch 3, bei dem
der mechanische Ableitungsrichtungswechselteil (141) ein ersten mechanischen Teil, der den Verschluss (143a) und die Ablenkfläche (143b) enthält, und einen zweiten mechanischen Teil aufweist, der das mechanische Eingriffbauteil (133g, 145e) hat,
der erste und zweite mechanische Teil Seite an Seite in der Einsetzrichtung des mechanischen Ablenkungsrichtungswechselteils (141) angeordnet sind und drehbar unter Beaufschlagung von einer Vorspannkraft eines Federbauteils (143f) in die beiden Richtungen um die Einsetzrichtung des mechanischen Ableitungsrichtungswechselbauteils (141) miteinander verbunden sind.

6. Elektrischer Hobel nach einem der Ansprüche 2 bis 5, bei dem Späne, die während des Hobelns des Werkstücks erzeugt werden, in die zweite Passage (146b) der Ableitungspassage (133) eingeleitet werden.

## Revendications

1. Raboteuse électrique, comprenant :
un moteur (121),
une lame de raboteuse (127) qui est entraînée en rotation par le moteur (121) et rabote une pièce, et
un mécanisme de décharge de copeaux (131), qui décharge les copeaux en utilisant de l'air d'échappement du moteur généré lorsque le moteur (121) est entraîné,
dans laquelle le mécanisme de décharge de copeaux (131) comprend un passage de décharge (133) qui s'étend dans une direction qui coupe la direction de rabotage de la lame de raboteuse (127), des ouvertures (133b, 133c) formées aux deux extrémités du passage de décharge (133) dans la direction d'extension et une entrée d'air d'échappement (133d) du moteur formée dans une région intermédiaire du passage de décharge (133) dans la direction d'extension, dans laquelle :
le mécanisme de décharge de copeaux (131) comprend en outre une partie mécanique (141) de changement de direction de décharge qui est formée séparément et montée de manière amovible sélectivement sur l'une quelconque des ouvertures (133b, 133c) pour déterminer de la sorte la direction de décharge, dans laquelle l'air d'échappement du moteur est déchargé vers l'extérieur à travers le passage de décharge (133),
**caractérisée en ce que** la partie mécanique (141) de changement de direction de décharge comprend un élément de fermeture (143a) qui ferme l'ouverture (133b, 133c), sur laquelle est monté l'élément de fermeture (143a), et un déflecteur (143b) qui modifie la direction d'écoulement de l'air d'échappement du moteur, et
le déflecteur (143b) s'étend dans la direction d'extension du passage de décharge (133) et guide l'air d'échappement du moteur acheminé dans le passage de décharge (133) à travers l'entrée d'air d'échappement (133d) du moteur vers l'élément de fermeture (143a), puis modifie la direction d'écoulement de l'air d'échappement du moteur à proximité de l'élément de fermeture (143a) et conduit l'air d'échappement du moteur à l'autre ouverture (133b, 133c) qui n'est pas fermée par l'élément de fermeture (143a).

2. Raboteuse électrique selon la revendication 1, dans laquelle le déflecteur (143b) divise le passage de décharge en un premier passage (146a) et en un second passage (146b) de manière isolée l'un de l'autre, le premier passage (146a) guidant l'air d'échappement du moteur de l'entrée d'air d'échappement (133d) du moteur à l'élément de fermeture (143a) et le second passage (146b) guidant l'air d'échappement du moteur, qui a tourné à proximité de l'élément de fermeture (143a), vers l'autre ouverture (133b, 133c).

3. Raboteuse électrique selon la revendication 1 ou 2,
dans laquelle :
la partie mécanique (141) de changement de la direction de décharge est insérée dans le passage de décharge (133) de manière sélective à partir de l'une ou l'autre des ouvertures (133b, 133c) et montée de manière amovible en position insérée par une partie mécanique d'engagement (133g, 145a),
la partie mécanique d'engagement (133g, 145a) comprend une section d'engagement (133g) et une section d'engagement (145e) déformable de manière élastique, qui s'engage de manière élastique dans la section d'engagement (133g) dans le sens opposé à celui de l'insertion de la partie mécanique (141) de changement' de direction de décharge, la section d'engagement (133g) étant disposée dans l'une des pièces choisies entre un composant de passage formant le passage de décharge (133) et la partie mécanique (141) de changement de direction de décharge et s'étendant dans une direction qui coupe la direction d'insertion de la partie mécanique (141) de changement de direction de décharge et la pièce d'engagement (145e) étant disposée dans l'autre des pièces choisies entre le composant de passage et la partie mécanique (141) de changement de direction de décharge, et
la pièce d'engagement (145e) est dégagée de la section d'engagement (133g) lorsqu'elle est soumise à une rotation dans la direction circonférentielle sur l'axe s'étendant dans la direction d'insertion, de manière à pouvoir autoriser le retrait de la partie mécanique (141) de changement de direction de décharge du passage de décharge (133).

4. Raboteuse électrique selon la revendication 2, dans laquelle :
le passage de décharge (133) comprend un orifice (133a) ayant les deux extrémités ouvertes dans la direction d'extension et un évidement (133f) qui est formé dans la surface de la paroi interne de l'orifice (133a), est évidé radialement vers l'extérieur et a une longueur prédéterminée s'étendant dans la direction d'extension de l'orifice (133a),
le déflecteur (143b) comprend un élément en forme de plaque, ayant une section d'arc de cercle et une longueur prédéterminée s'étendant dans la direction d'extension du passage de décharge (133), et le déflecteur (143b) est disposé à l'intérieur de l'évidement (133f) et divise de la sorte l'espace interne de l'orifice (133a) en un premier passage (146a) du côté de l'évidement (133f) et en un second passage (146b) du côté de l'orifice (133a), et
la surface de paroi radialement interne du déflecteur (143b) est uniformément contiguë à la surface de paroi interne de l'orifice (133a) qui définit le second passage (146b).

5. Raboteuse électrique selon la revendication 3, dans laquelle :
la partie mécanique (141) de changement de direction de décharge comprend une première partie mécanique ayant l'élément de fermeture (143a) et le déflecteur (143b), et une seconde partie mécanique ayant la partie mécanique d'engagement (133g, 145e),
les première et seconde parties mécaniques sont placées côte à côte dans la direction d'insertion de la partie mécanique (141) de changement de direction de décharge et sont raccordées à rotation l'une à l'autre en appliquant une force de sollicitation de l'élément à ressort (143f) dans les deux directions autour de la direction d'insertion de la partie mécanique (141) de changement de direction de décharge.

6. Raboteuse électrique selon l'une quelconque des revendications 2 à 5, dans laquelle les copeaux générés pendant le rabotage de la pièce sont acheminés dans le second passage (146b) du passage de décharge (133).
